(19)

Europäisches
Patentamt
European
Patent Office
Office européen
des brevets

(11)    **EP 1 991 945 B1**

(12)    **FASCICULE DE BREVET EUROPEEN**

(45) Date de publication et mention
de la délivrance du brevet:
**03.06.2009 Bulletin 2009/23**

(51) Int Cl.:
***G06K 9/00*** *(2006.01)*        ***G01S 17/74*** *(2006.01)*
***G01S 7/48*** *(2006.01)*

(21) Numéro de dépôt: **07712408.9**

(22) Date de dépôt: **01.03.2007**

(86) Numéro de dépôt international:
**PCT/EP2007/051957**

(87) Numéro de publication internationale:
**WO 2007/101816 (13.09.2007 Gazette 2007/37)**

(54) **PROCEDE D'IDENTIFICATION PAR PROFILOMETRIE LASER**

VERFAHREN ZUM IDENTIFIZIEREN DURCH LASERPROFILOMETRIE

METHOD FOR IDENTIFYING BY LASER PROFILOMETRY

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **09.03.2006 FR 0602117**

(43) Date de publication de la demande:
**19.11.2008 Bulletin 2008/47**

(73) Titulaire: **THALES
92200 Neuilly sur Seine (FR)**

(72) Inventeur: **BERGINC, Gérard
F-94320 Thiais (FR)**

(74) Mandataire: **Henriot, Marie-Pierre et al
Marks & Clerk France
Conseils en Propriété Industrielle
Immeuble " Visium "
22, avenue Aristide Briand
94117 Arcueil Cedex (FR)**

(56) Documents cités:
**DE-A1- 3 225 474        GB-A- 2 320 316
US-A- 4 380 391**

- **DATABASE INSPEC [Online] THE INSTITUTION
OF ELECTRICAL ENGINEERS, STEVENAGE, GB;
20 août 2000 (2000-08-20), STEINVALL O: "Effects
of target shape and reflection on laser radar cross
sections" XP002404789 Database accession no.
6704584 -& STEINVALL O: "Effects of target
shape and reflection on laser radar cross
sections" APPLIED OPTICS OPT. SOC.
AMERICA, vol. 39, no. 24, 20 août 2000
(2000-08-20), pages 4381-4391, XP002412739
USA ISSN: 0003-6935**
- **ESTEP J ET AL: "Ladar signature simulation"
PROCEEDINGS OF THE SPIE - THE
INTERNATIONAL SOCIETY FOR OPTICAL
ENGINEERING USA, vol. 1700, 1992, pages
119-130, XP002404790 ISSN: 0277-786X**
- **DANIELS D ED - INSTITUTION OF ELECTRICAL
ENGINEERS: "Applications of impulse radar
technology" RADAR '97. EDINBURGH, OCT. 14 -
16, 1997, IEE CONFERENCE PUBLICATION,
LONDON : IEE, GB, vol. NO. 449, 14 octobre 1997
(1997-10-14), pages 667-672, XP006508854 ISBN:
0-85296-698-9**

EP 1 991 945 B1

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

**EP 1 991 945 B1**

**Description**

Le domaine de l'invention est celui de l'identification non coopérative d'un objet à trois dimensions, par profilométrie. On entend par profilométrie la détermination du profil d'une signature électromagnétique sur un axe capteur-objet en fonction du paramètre distance, pour une largeur d'impulsion donnée de l'onde électromagnétique incidente ; la signature est issue de la rétro diffusion de l'onde électromagnétique par l'objet.

Il est connu d'identifier la signature profilométrique d'un objet 3D, tel qu'un aéronef, lorsqu'il s'agit d'une signature radar.

L'identification consiste à acquérir la signature de l'objet 3D à identifier et à la comparer à des signatures répertoriées dans une base de données.

Une signature profilométrique radar est généralement formée de pics très intenses mais peu nombreux. Une telle signature n'est alors pas suffisamment précise pour permettre de discriminer un objet d'un autre qui présente un profil voisin.

US 4, 380, 391 décrit l'identification d'un objet à trois dimensions par laser profilométrie.

Le but de l'invention est de pallier ces inconvénients afin d'obtenir une identification plus pertinente.

Plus précisément l'invention a pour objet un procédé d'identification d'un objet par profilométrie qui comprend une étape d'acquisition d'une signature profilométrique de l'objet et une étape de comparaison d'une signature de l'objet représentative de la signature acquise, avec les signatures d'une base de données. Il est principalement **caractérisé en ce que** la signature profilométrique de l'objet est obtenue par pointage sur l'objet d'un faisceau laser à impulsions de longueur $L_i$, cette longueur $L_i$ étant au moins 10 fois plus courte que la longueur $R_u$ de l'objet considérée selon l'axe de pointage du laser.

Selon une caractéristique de l'invention, le faisceau laser ayant un axe de pointage déterminé en fonction d'un angle de site et d'un angle de gisement, et l'objet présentant dans l'axe du faisceau laser, une dimension longitudinale, la signature acquise est :

- une signature 3D établie en fonction de la dimension longitudinale de l'objet, d'un angle de gisement et d'un angle de site, ou
- une signature 2D établie en fonction de la dimension longitudinale et d'un angle de gisement avec un angle de site déterminé, ou d'un angle de site avec un angle de gisement déterminé, ou
- une signature 1 D établie en fonction de la dimension longitudinale de l'objet avec un angle de gisement et un angle de site déterminés.

Selon une autre caractéristique de l'invention, la signature profilométrique comprend pour chaque dimension, une composante cohérente représentative de la réflexion du faisceau laser sur l'objet et une composante incohérente représentative dé la diffusion du faisceau laser sur l'objet.

De préférence, il comprend une étape de filtrage de la signature acquise, tel qu'un filtrage de type Shepp-Logan, la signature filtrée obtenue étant représentative de la signature acquise.

Avantageusement, la signature filtrée comportant des pics principaux, il comprend une étape pour déterminer les pics principaux de la signature filtrée, la signature à pics principaux obtenue étant représentative de la signature acquise.

De préférence, il comprend une étape consistant à exprimer chaque signature de la base de données en fonction de ses moments centrés d'ordre 1 à $k_{Max}$, $k_{max}$ étant prédéterminé par exemple normalisant chaque signature par rapport à son pic maximum, calculant les moments centrés d'ordre 1 à $k_{Max}$ de chaque signature.

La signature à comparer peut être la signature acquise.

Selon une caractéristique de l'invention, l'étape de comparaison comprend une étape de calcul du barycentre de la signature représentative de la signature acquise et éventuellement une étape de calcul du barycentre de chaque signature de la base de données.

Selon une autre caractéristique de l'invention, l'étape de comparaison comprend une étape de reconstruction tomographique basée sur une rétroprojection filtrée de la signature acquise.

Avantageusement, l'objet présentant dans l'axe du faisceau laser une dimension longitudinale, l'impulsion du laser présente une longueur de l'ordre de 100 fois inférieure à la dimension longitudinale de l'objet.

Par exemple, l'objet présentant dans l'axe du faisceau laser une dimension longitudinale, cette dimension longitudinale est comprise entre 10 m et 40 m.

De préférence, l'objet présentant dans une direction perpendiculaire à l'axe du faisceau laser une dimension transverse maximale, le faisceau laser a une ouverture apte à contenir cette dimension maximale.

La durée des impulsions du laser est par exemple de l'ordre de 1ns ; la longueur d'onde du laser est par exemple sensiblement égale à 1.55 µm.

L'objet est mono dimensionnel ou bidimensionnel ou tridimensionnel.

L'invention concerne également un procédé de constitution d'une base de données de signatures profilométriques d'objets, **caractérisé en ce que** pour chaque objet, la signature profilométrique est obtenue par simulation numérique du pointage sur l'objet d'un faisceau laser à impulsions de très courtes durées.

Selon une caractéristique de l'invention, la signature profilométrique comprend pour chaque dimension, une composante cohérente représentative de la réflexion du faisceau laser sur l'objet et une composante incohérente représentative de la diffusion du faisceau laser sur l'objet.

Chaque signature de la base de données est de préférence calculée de la manière suivante :

- représentation numérique de l'objet,
- facettisation, c'est-à-dire découpage de la représentation en facettes triangulaires, chaque triangle étant défini en fonction de sa position dans l'objet, son orientation, sa taille, son indice optique, sa rugosité,
- calcul de la signature à partir des facettes.

Il comprend avantageusement une étape consistant à exprimer chaque signature de la base de données en fonction de ses moments centrés d'ordre 1 à $k_{Max}$, $k_{max}$ étant prédéterminé.

Plus précisément, l'étape précédente comprend les étapes consistant à :

normaliser chaque signature par rapport à son pic maximum,
calculer les moments centrés d'ordre 1 à $k_{Max}$ de chaque signature, et éventuellement à :

construire une matrice normalisée F des signatures de tous les objets,
construire une matrice de confusion des signatures de la base de données entre elles.

La matrice de confusion peut être construite en fonction d'un paramètre représentatif du bruit.

Selon une caractéristique de l'invention, la base de données est répartie en au moins deux sous-bases de données à partir de la matrice de confusion.

Comme indiqué précédemment, chaque signature est filtrée par exemple selon un filtrage de type Shepp-Logan.

Les signatures peuvent être des signatures 1 D, ou 2D ou 3D.

Les exemples d'application numérique sont les mêmes que pour le procédé d'identification.

Les objets peuvent être mono dimensionnels ou bidimensionnels ou tridimensionnels.

D'autres caractéristiques et avantages de l'invention apparaîtront à la lecture de la description détaillée qui suit, faite à titre d'exemple non limitatif et en référence aux dessins annexés dans lesquels :

la figure 1a représente schématiquement un exemple de pointage d'un faisceau laser à impulsions sur un objet, en l'occurrence un avion, et la figure 1b, la signature 1D acquise,
la figure 2 illustre schématiquement la signature 1 D obtenue avec une résolution spatiale étroite et large,
la figure 3 représente schématiquement un exemple de signature 2D avant et après un filtrage de type Shepp-Logan,
la figure 4 représente schématiquement la signature 2D filtrée de la figure 3 dans laquelle on a déterminé 5 pics principaux,
la figure 5a représente schématiquement un exemple de matrice de signature laser en distance et sa représentation dans le plan de l'image projetée, la figure 5b, les projections d'un point $(x_i, y_i)$ obtenues sur trois rayons et la position des composantes correspondantes dans les lignes de la matrice de SELd,
la figure 6 représente schématiquement un exemple de reconstruction tomographique d'un aéronef par une rétroprojection projetée filtrée.

D'une figure à l'autre, les mêmes éléments sont repérés par les mêmes références.

Selon l'invention les signatures profilométriques sont obtenues par pointage sur l'objet d'un faisceau laser à impulsions de courtes durées. La durée T des impulsions est liée à leur longueur $L_i$ par la formule :

$L_i = c\ T/2$, c étant la vitesse de la lumière.

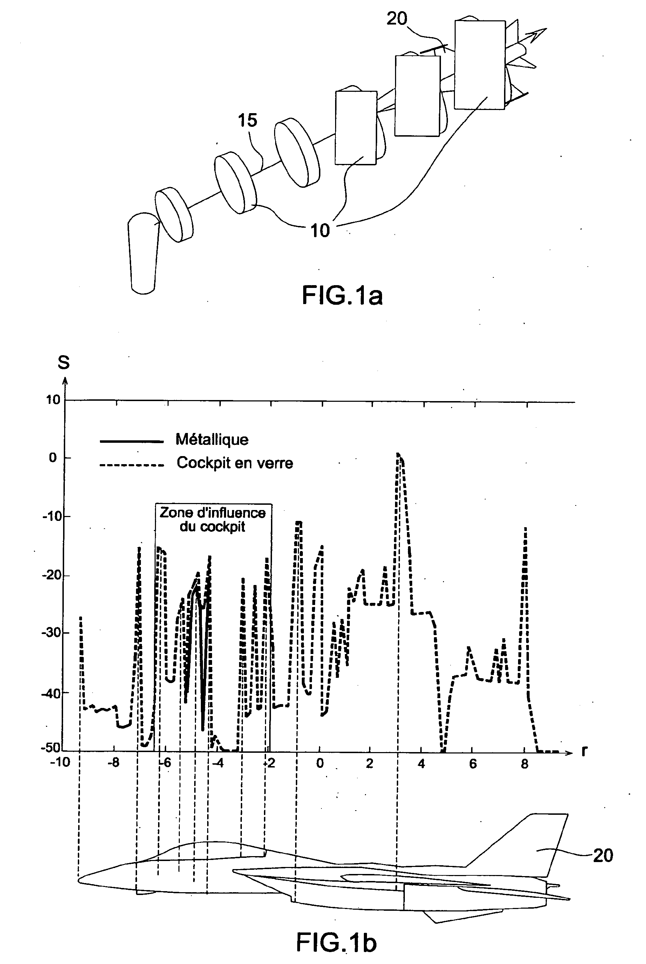

Choisir une impulsion de courte durée signifie que l'on choisit une longueur $L_i$ très inférieure à la profondeur de l'objet aussi désignée dimension longitudinale $R_u$ de l'objet. Cela signifie que l'objet est temporellement résolu. Cette dimension $R_u$ est considérée dans la direction de l'axe 15 du faisceau laser, représenté figure 1a.

En utilisant par exemple une impulsion d'environ 1 nanoseconde (on a alors $L_i = 15$ cm), on obtient un balayage de l'objet par tranches de 15 cm d'épaisseur selon la dimension $R_u$ de l'objet. Une tranche est repérée par la distance $r_i$ ; $r_i$ varie de 1 à $R_u$, par pas de $L_i$ et on a $N_r$ tranches avec $N_r = R_u / L_i$. Un tel balayage est suffisant pour établir la signature d'un aéronef d'environ 15 m de long ou plus (on a $R_u = 15$ m). Chaque impulsion laser est ainsi intégrée sur toute la cible, c'est-à-dire l'impulsion « court » sur l'objet sur sa longueur $R_u$, ici sur 15 mètres donc pendant plus de 100 ns. Elle est rétrodiffusée et rétroréfléchie par les différentes structures de l'objet ce qui revient à couper l'objet en tranches de 15 centimètres pour une durée d'impulsion laser d'une nanoseconde. Un détecteur de cette rétrodiffusion et rétroréflexion donne une signature profilométrique comprenant l'ensemble des points brillants ou échos de l'objet pouvant être espacés tous les quinze centimètres. En effet, la signature S comporte alors environ une centaine de points, un point p(r$_i$) représentant la signature d'une tranche r$_i$. On a :

$$S = \sum_{i=1}^{Nr} p(r_i)$$

Les impulsions suivantes permettent de réaliser une post-intégration et ainsi d'augmenter le rapport signal/ bruit de la signature.

On utilise par un exemple un laser dont la longueur d'onde est sensiblement égale à 1.55 $\mu$m, cette longueur d'onde permettant notamment d'assurer une sécurité oculaire, ou plus généralement une longueur d'onde de la bande I c'est-à-dire comprise entre 0,8 $\mu$m et 2,5 $\mu$m.

On donne figure 1a un exemple de pointage d'un faisceau laser à impulsions 10 sur un avion 20, et la signature obtenue figure 1 b.

La signature profilométrique p(r$_i$) comprend une composante cohérente représentative de la réflexion du faisceau laser sur l'objet et une composante incohérente représentative de la diffusion du faisceau laser sur l'objet. Pour obtenir cette composante incohérente, on choisit une longueur d'onde du même ordre de grandeur que la taille de rugosité de la surface. Ceci permet notamment d'obtenir pour un angle d'illumination donné, une signature stable dans le temps c'est-à-dire stable d'une impulsion à l'autre, ce qui permet de réaliser la post-intégration.

La signature S d'un objet est mono-dimensionnelle (1D), bi-dimensionnelle (2D) ou tri-dimensionnelle (3D). Une signature 3D est établie en fonction de la dimension longitudinale de l'objet, d'un angle de gisement et d'un angle de site, une signature 2D en fonction de cette dimension longitudinale et d'un angle dé gisement avec un angle de site déterminé, ou d'un angle de site avec un angle de gisement déterminé, et une signature 1 D en fonction de la dimension longitudinale de l'objet avec un angle de gisement et un angle de site déterminés. On désigne par angle d'observation l'angle ayant une composante en gisement et une composante en site. Dans la suite on considère des signatures 3D.

Par ailleurs le faisceau laser a une ouverture permettant de couvrir l'objet dans ses dimensions transverses. Dans la mesure où la distance entre l'objet et le détecteur varie, l'ouverture varie également de manière à s'ajuster aux dimensions transverses de l'objet pour obtenir la meilleure efficacité du détecteur.

Dans la suite, on prend comme exemple d'objets, des aéronefs.

On considère dans un premier temps l'étape de création de la base de données des signatures profilométriques de Nc objets. Chaque signature de la base de données est calculée de la manière suivante.

Le calcul comprend une première étape de représentation numérique 3D précise de l'objet obtenue par exemple par un logiciel de CAO (« Conception assistée par Ordinateur »). Le degré de finesse de la représentation est lié aux dimensions des détails représentés de la structure ; par exemple sur un aéronef, le degré de finesse est inférieur ou égal au centimètre.

La deuxième étape dite de facettisation consiste à découper la représentation 3D en facettes triangulaires planes. Une cible détaillée comprend typiquement de 40 000 à 200 000 facettes. Chaque facette triangulaire est définie en fonction de sa position dans l'objet, son orientation, sa taille, et ses caractéristiques de surface telles que son indice optique, sa rugosité, sa permittivité effective. La rugosité est définie par une densité de probabilité des hauteurs et une fonction dite d'auto-corrélation des hauteurs. Cette fonction d'auto-corrélation va déterminer la pseudo-périodicité de la rugosité de surface. Les triangles sont quelconques, isocèles ou équilatéraux.

La troisième étape consiste à modéliser l'interaction du faisceau laser polarisé avec l'objet découpé en facettes, par simulation numérique de la rétro-diffusion et rétro-réflexion électromagnétiques du faisceau laser sur la structure éclairée. Le calcul de l'interaction électromagnétique est effectué facette par facette ; lorsqu'il est nécessaire de reconstituer la courbure de l'objet à partir de facettes planes, on utilise un algorithme de reconstruction de la courbure de l'objet basé sur l'utilisation des normales aux sommets des facettes. Au cours de cette troisième étape, le calcul électromagnétique est effectué en prenant en compte le profil temporel de l'impulsion laser. La signature globale de la cible pour une largeur d'impulsion donnée est obtenue en sommant l'ensemble des contributions des facettes éclairées par le faisceau laser, à la rétro-diffusion et rétro-réflexion de l'onde laser incidente polarisée sur l'objet tri-dimensionnel. L'ensemble des facettes contribuant à la signature laser pour un profil temporel donné du faisceau peut être assimilé à une tranche de l'objet.

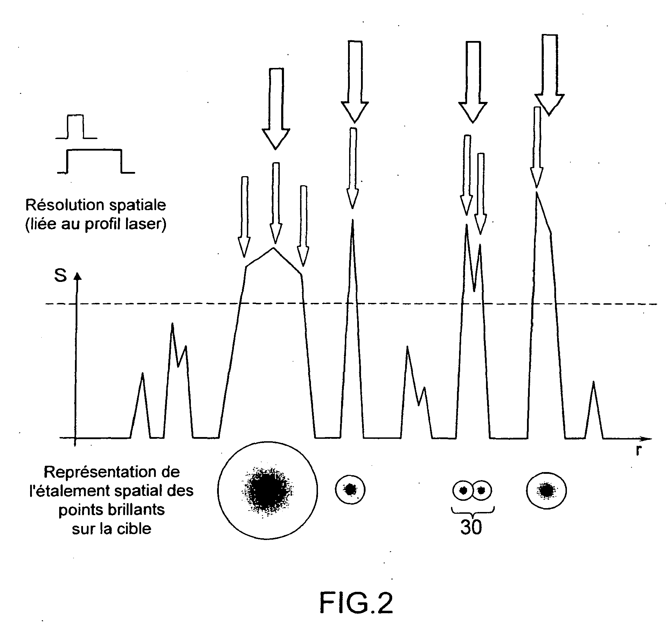

La résolution spatiale de la signature est liée au profil de l'impulsion laser : plus la largeur de sa réponse impulsionnelle est étroite, plus le nombre de points brillants (aussi désignés contributeurs) est important. On a illustré figure 2, le nombre de points brillants obtenus avec une résolution spatiale étroite (trait plein) et large (trait en pointillé) : le double pic 30 de la signature S peut être distingué avec une résolution spatiale étroite mais pas avec une résolution large.

Les signatures ainsi obtenues sont stockées dans la base de données en vue de leur comparaison avec la signature réelle de l'objet à identifier. Elles sont alors soumises à un traitement visant à diminuer le nombre de signatures à comparer. Ce traitement réalisé en appliquant un algorithme des moments centrés, est basé sur un calcul des moments centrés de la signature à l'ordre k.

Il comprend une 1ère étape de normalisation de chacune des signatures pour les $N_c$ objets et pour les $N_a$ angles d'observation, la normalisation s'effectue par rapport au pic maximum de la signature considérée. La signature normalisée $\overline{S}$ pour les $N_r$ tranches $r_i$ d'un objet O observé sous un angle d'observation $\theta$ déterminé est désignée :

$$\overline{S}(O,\theta) = \sum_{i=1}^{Nr} \overline{p}(r_i, O, \theta).$$

L'étape suivante consiste à calculer pour chacune de ces signatures les moments centrés $\mu_k$ d'ordre k, k variant entre 1 et $k_{max}$ ; on a typiquement $k_{max} = 10$.

$$\mu_k = \sum_{i=1}^{N_r} (r_i - \eta_r)^k \left[ \frac{\overline{p}_m(r_i)}{\sum_{i=1}^{N_r} \overline{p}_m(r_i)} \right] \quad , r_i \in [0, R_u]$$

où $R_u$ est la dimension spatiale maximale de la cible, comme indiqué plus haut.

$$\eta_r = \sum_{i=1}^{N_r} r_i \left[ \frac{\overline{p}_m(r_i)}{\sum_{i=1}^{N_r} \overline{p}_m(r_i)} \right]$$

L'amplitude des moments peut augmenter exponentiellement quand on augmente l'ordre k du calcul, c'est pourquoi on travaille dans un domaine spatial : $r_i = [0,1]$ plutôt que $[0,R_u]$. La résolution spatiale $\Delta r$ s'exprime alors par :

$$\Delta r = \frac{1}{N_r - 1}$$ ce qui implique $|r_i - \eta_r| < 1$. L'amplitude des moments centrés décroît exponentiellement ce qui peut être moins sensible au bruit et aux erreurs de quantifications.

Nous définissons un vecteur f par :

$$\mathbf{f} = [\, f_1, f_2 \ldots, f_{kmax} \,]^{\mathbf{T}} = [\, \mu_1, \mu_2 \ldots, \mu_{kmax} \,]^{\mathbf{T}}$$

Pour l'ensemble des $N_c$ objets et pour les $N_a$ angles d'observation, on exprime la base de données des signatures sous la forme d'une matrice F dite base d'entraînement de la façon suivante :

$$F = \begin{bmatrix} f_{11} & f_{12} & \cdots & f_{1Q} \\ f_{21} & f_{22} & \cdots & f_{2Q} \\ \vdots & \vdots & \ddots & \vdots \\ f_{k_{max}1} & f_{k_{max}2} & \cdots & f_{k_{max}Q} \end{bmatrix}$$

où $Q = N_a . N_c$

La dimension de la matrice est $k_{max}$ x Q.

Par définition, les moments centrés d'ordre 1 sont égaux à zéro.

L'amplitude des moments centrés et donc des vecteurs colonnes de la matrice F décroît rapidement quand on augmente la valeur de l'ordre k. Cependant les moments centrés devraient avoir le même poids dans l'espace euclidien pour augmenter l'efficacité de classement ; c'est pourquoi on effectue une transformation des éléments de F de façon à leur donner le même poids dans l'espace Euclidien quels que soient l'ordre p du moment ; ceci permet d'améliorer la précision de la classification. Nous avons ainsi transformé les éléments de la matrice F en valeurs comprises entre zéro et l'unité.

On obtient ainsi la matrice normalisée suivante :

$$\overline{F} = \begin{bmatrix} \bar{f}_{11} & \bar{f}_{12} & \cdots & \bar{f}_{1Q} \\ \bar{f}_{21} & \bar{f}_{22} & \cdots & \bar{f}_{2Q} \\ \vdots & \vdots & \ddots & \vdots \\ \bar{f}_{k_{max}1} & \bar{f}_{k_{max}2} & \cdots & \bar{f}_{k_{max}Q} \end{bmatrix}$$

où

$$\bar{f}_{ij} = \frac{f_{ij} - f_{i\min}}{f_{i\max} - f_{i\min}} \qquad \text{avec} \quad \begin{cases} i = 1,2,...,k_{max} \\ j = 1,2,...,Q \end{cases}$$

où

$$\begin{cases} f_{i\min} = \min(f_{ij}), \ j = 1,2,...,Q \ \text{pour un } i \text{ donné} \\ f_{i\max} = \max(f_{ij}), \ j = 1,2,...,Q \ \text{pour un } i \text{ donné} \end{cases}$$

Les calculs sont globalement simples à effectuer et leur temps d'exécution n'est pas un facteur limitant. Pour la première ligne, les coefficients sont égaux à zéro.

On utilise ensuite une méthode du type PCA (Principal Component Analysis) transformant les vecteurs colonnes de la matrice :

$$\overline{F}$$

en vecteurs $x_n$, $n=1,2,...,Q$ où $Q=N_c.N_a$. On normalise ensuite ces vecteurs $x_n$. La transformation PCA exprime les données d'identification dans une base de vecteurs $x_n$ permettant d'éliminer la redondance d'information nécessaire à l'identification.

Afin de démontrer la technique proposée, on l'applique à une situation d'identification par impulsion courte laser; on calcule alors les matrices de confusion des signatures entre elles, pour différents objets, pour une valeur d'observation, et pour différentes valeurs σ d'écarts types de bruits gaussiens. Pour chaque signature de la base de données, on effectue une corrélation entre cette signature et toutes les autres signatures de la base de données ayant subi le même calcul des moments centrés que la base d'entraînement. Pour cela, on peut utiliser un « classifieur » de Bayes ou une corrélation par seuillage. Les éléments de la matrice de confusion sont déterminés par le rapport entre le nombre d'identifications correctes et le nombre de tests effectués, chaque signature de la base de données étant comparée aux autres signatures de la base de données. Les éléments de la matrice de confusion sont exprimés en pourcentage. Le rejet correspond au cas où aucune signature n'a été identifiée pour un cas test donné.

On obtient par exemple les matrices de confusion suivantes pour une base de données de 6 vecteurs, un vecteur correspondant à un objet observé sous un angle d'observation déterminé. Dans cet exemple, les objets sont les aéronefs : Su-33, Mirage, F-14, F-15, F-16, F-18.

Ce premier exemple de matrice de confusion est obtenu avec σ = 0,063 ; il y a 3,3 % de rejets en moyenne.

|  | Su-33 | Mirage | F-14 | F-15 | F-16 | F-18 | Rejets |
|---|---|---|---|---|---|---|---|
| Su-33 | 98,76% | 0,00% | 0,56% | 0,00% | 0,00% | 0,66% | 1,97% |
| Mirage | 0,00% | 100% | 0,00% | 0,00% | 0,00% | 0,00% | 1,97% |
| F-14 | 0,33% | 0,00% | 99,33% | 0,00% | 0,00% | 0,33% | 1,64% |
| F-15 | 0,00% | 0,00% | 0,00% | 100% | 0,00% | 0,00% | 0,65% |
| F-16 | 0,00% | 0,00% | 0,00% | 0,00% | 100% | 0,00% | 13,29% |
| F-18 | 0,10% | 0,00% | 0,65% | 0,00% | 0,00% | 99,23% | 0,43% |

Le deuxième exemple de matrice de confusion est obtenu avec σ = 0,19 ; il y a 15,89 % de rejets en moyenne.

|  | Su-33 | Mirage | F-14 | F-15 | F-16 | F-18 | Rejets |
|---|---|---|---|---|---|---|---|
| Su-33 | 93,95% | 0,00% | 0,71% | 0,00% | 0,00% | 5,32% | 9,89% |
| Mirage | 0,00% | 97,91% | 0,00% | 1,44% | 0,64% | 0,00% | 10,76% |
| F-14 | 0,99% | 0,00% | 88,44% | 0,00% | 0,00% | 10,56% | 13,40% |
| F-15 | 0,00% | 0,00% | 0,00% | 100% | 0,00% | 0,00% | 11,20% |
| F-16 | 0,00% | 13,99% | 0,00% | 0,00% | 86,00% | 0,00% | 36,26% |
| F-18 | 1,93% | 0,00% | 13,82% | 0,00% | 0,00% | 84,24% | 13,84% |

Le troisième exemple de matrice de confusion est obtenu avec σ = 0,38 ; il y a 34,99 % de rejets en moyenne.

|  | Su-33 | Mirage | F-14 | F-15 | F-16 | F-18 | Rejets |
|---|---|---|---|---|---|---|---|
| Su-33 | 85,16% | 0,00% | 3,26% | 0,00% | 0,00% | 11,57% | 19,78% |
| Mirage | 0,00% | 77,94% | 0,00% | 5,68% | 16,37% | 0,00% | 53,40% |
| F-14 | 6,52% | 0,00% | 61,74% | 0,00% | 0,00% | 31,73% | 28,35% |
| F-15 | 0,00% | 0,00% | 0,00% | 99,85% | 0,14% | 0,00% | 28,57% |
| F-16 | 0,00% | 42,28% | 0,00% | 2,84% | 54,87% | 0,00% | 52,74% |
| F-18 | 3,45% | 0,00% | 26,48% | 0,00% | 0,00% | 70,06% | 26,92% |

L'algorithme des moments est donc très performant en l'absence de bruit ou avec un bruit faible (par exemple dans le cadre d'une identification d'un aéronef à haute altitude où le bruit dû à la turbulence est faible) et présente l'avantage de s'affranchir des problèmes de recalage des signatures et de la mesure absolue puisqu'on a une normalisation systématique des signatures. Il constitue un excellent moyen de discriminer les grandes classes d'objets. Des objets de taille et de complexité différentes sont parfaitement discriminés. Ainsi une confusion peut se produire entre avions de même type quand on augmente le bruit (petits chasseurs du type F-16 ou Mirage 2000, chasseurs-bombardiers de grande taille du type F-14, F-18, Su-33 ) ; typiquement, on tend à confondre le F-16 avec le Mirage 2000, le F-14 avec un Sukhoï (dans une moindre mesure du fait de la richesse de la signature de ces avions de grande taille) mais jamais avec un avion de type complètement différent. On ne confond jamais un Sukhoï avec un avion du type Mirage-2000 ou du type F-16 ni un F-14 avec un Mirage ou un F-16 comme le montrent les différentes matrices de confusion.

Dans le cadre d'une identification à faible bruit à haute altitude par exemple, l'algorithme des moments peut être utilisé seul. Quand on augmente le bruit, une confusion se produit uniquement entre avions de même type.

Dans le cadre d'une identification plus difficile à réaliser, par exemple en limite de portée de l'instrument ou avec un fort bruit de turbulence, on utilise cet algorithme pour diminuer le nombre de signatures à comparer en répartissant la base de données d'origine, en sous-bases d'objets de même type c'est-à-dire ayant par exemple une dimension longitudinale comparable. Chaque sous-base regroupe les objets pouvant être confondus, c'est-à-dire dont le coefficient de confusion dans la matrice de confusion est supérieur à un seuil déterminé. On fixe par exemple ce seuil à 0.5 %. Ainsi on déterminera dans l'exemple choisi deux classes d'objets.

Avant d'être réparties dans une sous-base, les signatures sont de préférence filtrées de manière à privilégier les pics principaux.

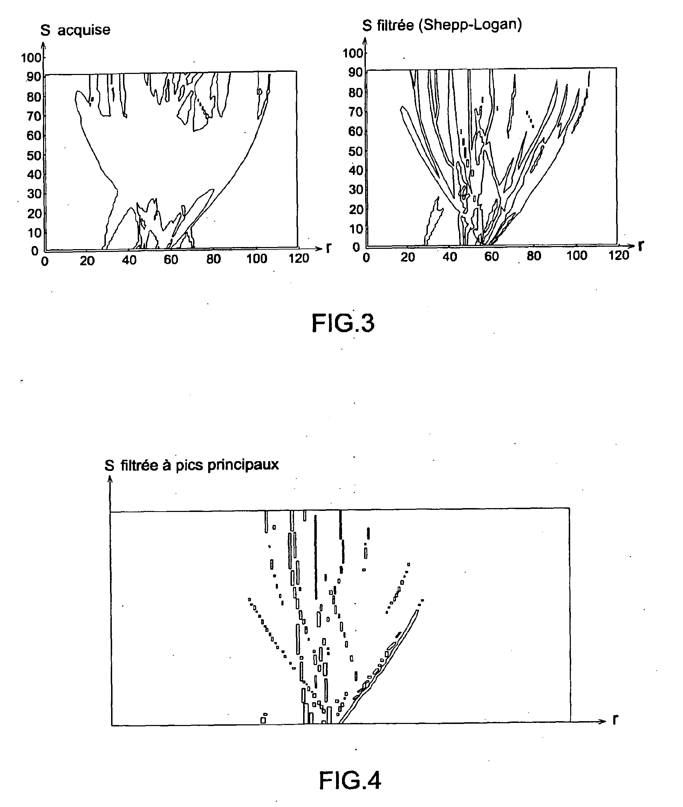

Tout d'abord, on utilise par exemple un filtrage de type Shepp-Logan qui permet de faire ressortir les points brillants par rapport au fond continu de la signature. On donne figure 3 un exemple de signature profilométrique 2D, avant et après filtrage Shepp-Logan. L'abscisse correspond à la dimension longitudinale de l'avion, l'ordonnée à l'angle d'observation pour un plan de site à 0 degré.

Puis on détermine les pics principaux en appliquant la règle suivante : sont conservés les n pics les plus intenses séparés d'au moins deux fois la résolution spatiale de la signature, ce critère étant utilisé pour s'affranchir autant que possible des problèmes de phasage et de dédoublement artificiel des points brillants. La figure 4 donne la signature 2D de la figure 3 obtenue après application de cette règle : elle présente cinq points brillants par ordonnée.

On considère à présent l'étape de comparaison de la signature d'un objet a priori inconnu, avec celles de la base de données.

La signature à identifier est acquise comme indiqué précédemment, par pointage sur l'objet d'un faisceau laser à impulsions courtes et en effectuant le calcul électromagnétique tel que décrit pour la création de la base de données.

La signature acquise est de préférence filtrée par un filtrage de type Shepp-Logan ; puis on détermine les pics principaux de la signature filtrée.

On détermine alors la sous-base de données qui va être utilisée pour comparer et identifier la signature acquise. Pour chaque signature acquise $x_u$, on détermine par corrélation du vecteur $x_n$ le plus proche la classe à laquelle appartient l'objet possédant la signature $x_n$, chaque vecteur $x_u$ ayant subi le même calcul des moments centrés que la base d'entraînement. Pour cela, on peut utiliser un « classifieur » de Bayes ou une corrélation par seuillage. Eventuellement, toute la base de données va être utilisée.

La signature est alors comparée aux signatures de la base de données (ou sous-base de données) exprimées sous la même forme. Il y a plusieurs modes de comparaison.

Selon un premier mode, on calcule la position barycentrique des pics principaux des signatures de la base de données et de la signature à identifier ; on les compare en les recalant en position (par corrélation). Cette méthode est notamment utilisée lorsque l'angle d'observation est quasiment constant pendant les mesures. Il n'y a pas de changement de positionnement des pics principaux entre les différentes mesures et il est alors intéressant d'intégrer différentes mesures afin d'obtenir un rapport signal à bruit important. Pour un laser de cadence 10 hertz, il est alors possible d'intégrer 10 mesures par seconde. Le gain est alors de $\sqrt{10}$.

Selon un deuxième mode, la signature est ensuite comparée directement à celles de la base de données filtrée. Cette méthode est notamment utilisée lorsque l'angle d'observation est variable. Le porteur fait alors une trajectoire dite en hippodrome pour acquérir les signatures sur un secteur angulaire restreint, par exemple un secteur angulaire d'environ une dizaine de degrés. On compare directement par corrélation la signature filtrée bi-dimensionnelle (établie en fonction de l'angle d'observation et de la distance longitudinale de l'objet) de l'objet mesuré avec celles des objets stockés dans les bases de données.

Selon un troisième mode, on utilise une technique de reconstruction tomographique d'un objet par rétroprojection filtrée. On compare par corrélation visuelle ou numérique la reconstruction de l'objet à identifier avec les reconstructions des objets de la base de données. Cette méthode est notamment utilisée lorsque l'angle devient important, par exemple au-delà de 20

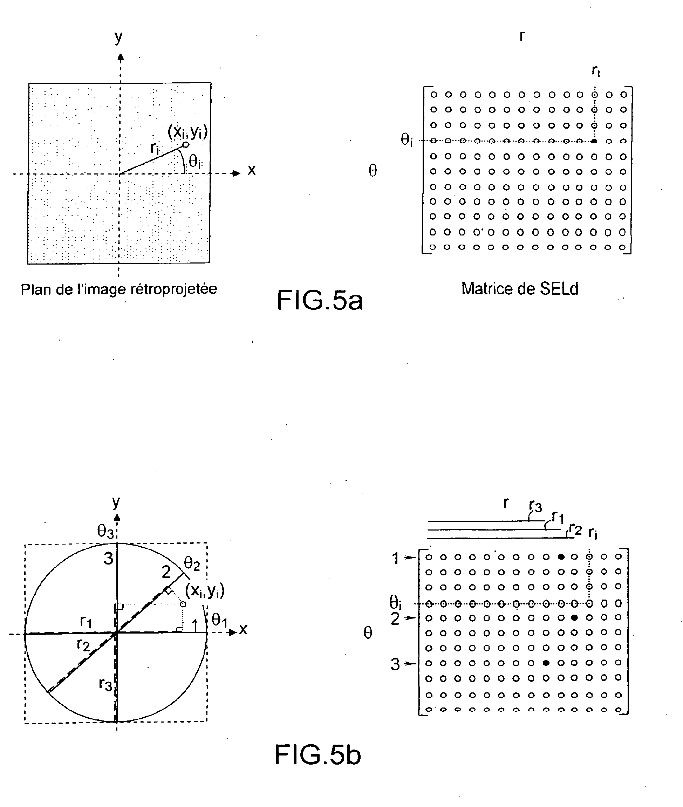

La rétroprojection directe est une représentation dans le plan cartésien (x,y) des informations contenues dans la matrice de signature laser en distance appelée SELd en coordonnées polaires (r,θ) comme illustré figure 5a. La matrice SELd est définie comme un tableau de points dont l'élément ij représente la valeur de la signature laser en fonction de l'angle d'observation et de la distance longitudinale d'observation de la cible.

La valeur de la SELd projetée au point ($r_{i\ projeté}$ , $\theta_{i\ projeté}$) où

$$r_{i\ projeté} = x_i \cos \theta_i + y_i \sin \theta_i \ ,$$

est obtenue par interpolation linéaire.

L'image g(x,y) reconstruite par rétroprojection directe s'écrit :

$$g(x,y) = \int_{\text{secteur angulaire}} SELd(x \cos\theta + y \sin\theta) d\theta$$

Chaque point du plan de coordonnées *(xᵢ,yᵢ)* est projeté sur chaque rayon $\theta_i$ (ligne de la matrice de SELd pour un angle d'observation déterminé). La contribution totale à ce point est la moyenne de l'ensemble des projections du secteur angulaire concerné. On a représenté sur la figure 5b les projections d'un point (xᵢ,yᵢ) obtenues sur trois rayons et la position des composantes correspondantes dans les lignes de la matrice de SELd.

Lorsque l'image pour une cible réelle apparaît très bruitée par la méthode de reconstruction même et par les perturbations extérieures telles que les turbulences atmosphériques, on applique alors un filtre aux valeurs de SELd obtenues avant d'effectuer la rétroprojection.

La reconstruction de la projection filtrée consiste à multiplier les valeurs du filtre par la transformée de Fourier des valeurs de la SEL projetée et à prendre ensuite la transformée de Fourier inverse du résultat obtenu. D'après le théorème de convolution, un résultat équivalent est obtenu en convoluant les valeurs de SELd avec l'équivalent spatial réel de la fonction rampe. Symboliquement, on peut écrire :

$$SELd_{filtrée} = \tilde{F_1}^{-1} [\ |\ f\ |\ w(f)\ \tilde{F_1}\ (SELd_{brute})\ ]$$

$F_1$ représente la transformée de Fourier mono-dimensionnelle
w(f) est une fonction de fenêtrage définissant le filtre |f| w(f).

Le théorème de convolution montre qu'un résultat équivalent est obtenu en calculant :

$$SELd_{filtrée} = \{\ \tilde{F_1}^{-1}\ [\ |\ f\ |\ w(f)\ ]\ \} \bullet (SELd_{brute})$$

Le symbole "•" représente le produit de convolution.

$$\{\ \tilde{F_1}^{-1}\ [\ |\ f\ |\ w(f)\ ]\ \}$$

est la fonction de convolution caractéristique de la fonction de fenêtrage w.

On peut utiliser différents filtres.

Le filtre choisi dépend de la signature à traiter. Pour les signatures peu bruitées, le filtre Shepp-Logan est préféré au filtre Ram-Lak. Le filtre passe-bas Hamming généralisé est utilisé quand le bruit est significatif, son coefficient α pouvant être optimisé en fonction du niveau de bruit. En présence d'un bruit plus important, le filtre stochastique permet d'obtenir de bons résultats en choisissant une forte valeur du rapport signal/bruit (ou « SNR » acronyme de l'expression anglo-saxonne Signal to Noise Ratio).

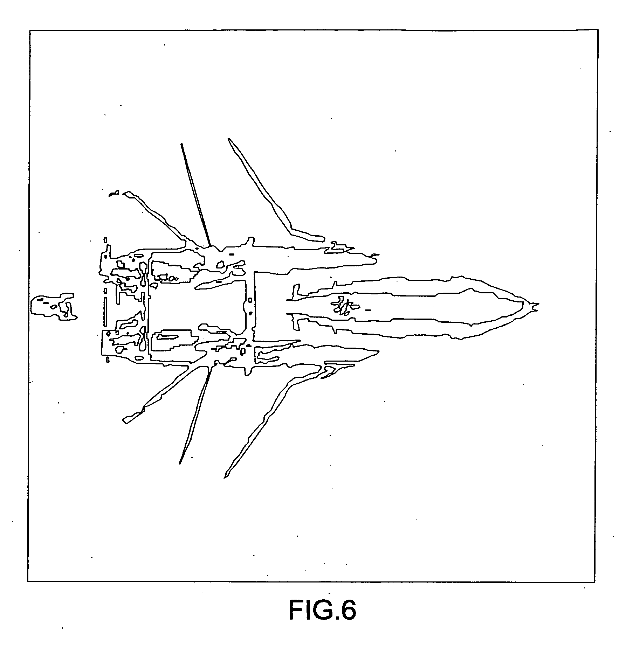

On a représenté figure 6 un exemple de reconstruction tomographique d'un aéronef par une rétroprojection projetée filtrée avec un filtrage du type Shepp-Logan

On a pris des exemples d'objets 3D. L'invention s'applique également à des objets à 2 dimensions tels que des cellules biologiques, voire à des objets à 1 dimension.

**Revendications**

1. Procédé d'identification d'un objet par profilométrie qui comprend une étape d'acquisition d'une signature profilométrique de l'objet et une étape de comparaison d'une signature de l'objet représentative de la signature acquise, avec des signatures d'une base de données, **caractérisé en ce que** la signature profilométrique de l'objet est obtenue par pointage sur l'objet d'un faisceau laser à impulsions de longueur $L_i$, cette longueur $L_i$ étant au moins 10 fois plus courte que la longueur $R_u$ de l'objet considérée selon l'axe de pointage du laser, **en ce que** pour chaque impulsion, la signature est obtenue par intégration sur la longueur $R_u$ et **en ce qu'**ainsi la signature comporte $R_u/L_i$ points.

2. Procédé selon la revendication précédente, **caractérisé en ce que** le faisceau laser ayant un axe de pointage déterminé en fonction d'un angle de site et d'un angle de gisement, et l'objet présentant dans l'axe du faisceau laser, une dimension longitudinale, la signature acquise est :

   - une signature 3D établie en fonction de la dimension longitudinale de l'objet, d'un angle de gisement et d'un angle de site, ou
   - une signature 2D établie en fonction de la dimension longitudinale et d'un angle de gisement avec un angle de site déterminé, ou d'un angle de site avec un angle de gisement déterminé, ou
   - une signature 1 D établie en fonction de la dimension longitudinale de l'objet avec un angle de gisement et un angle de site déterminés.

3. Procédé selon la revendication précédente, **caractérisé en ce que** la signature profilométrique comprend pour chaque dimension, une composante cohérente représentative de la réflexion du faisceau laser polarisé sur l'objet et une composante incohérente représentative de la diffusion du faisceau laser polarisé sur l'objet.

4. Procédé selon l'une quelconque des revendications précédentes, **caractérisé en ce qu'**il comprend une étape de filtrage de la signature acquise, la signature filtrée obtenue étant représentative de la signature acquise.

5. Procédé selon la revendication précédente, **caractérisé en ce que** le filtrage est un filtrage de type Shepp-Logan.

6. Procédé selon l'une quelconque des revendications 4 ou 5, **caractérisé en ce que** la signature filtrée comportant des pics principaux, il comprend une étape pour déterminer les pics principaux de la signature filtrée, la signature à pics principaux obtenue étant représentative de la signature acquise.

7. Procédé selon l'une quelconque des revendications précédentes, **caractérisé en ce qu'**il comprend une étape consistant à exprimer chaque signature de la base de données en fonction de ses moments centrés d'ordre 1 à $k_{Max}$, $k_{max}$ étant prédéterminé.

8. Procédé selon la revendication précédente, **caractérisé en ce que** l'étape précédente comprend les étapes consistant à :

   normaliser chaque signature par rapport à son pic maximum,
   calculer les moments centrés d'ordre 1 à $k_{Max}$ de chaque signature.

9. Procédé selon l'une quelconque des revendications précédentes, **caractérisé en ce que** la signature à comparer est la signature acquise.

10. Procédé selon l'une quelconque des revendications 1 à 6, **caractérisé en ce que** l'étape de comparaison comprend une étape de calcul du barycentre de la signature représentative de la signature acquise.

11. Procédé selon la revendication précédente, **caractérisé en ce que** l'étape de comparaison comprend une étape de calcul du barycentre de chaque signature de la base de données.

12. Procédé selon l'une quelconque des revendications 1 à 6, **caractérisé en ce que** l'étape de comparaison comprend une étape de reconstruction tomographique basée sur une rétroprojection filtrée de la signature acquise.

13. Procédé selon l'une quelconque des revendications précédentes, **caractérisé en ce que** l'objet présentant dans l'axe du faisceau laser, une dimension longitudinale, l'impulsion du laser présente une longueur de l'ordre de 100 fois inférieure à la dimension longitudinale de l'objet.

**14.** Procédé selon l'une quelconque des revendications précédentes, **caractérisé en ce que** l'objet présentant dans l'axe du faisceau laser, une dimension longitudinale, cette dimension longitudinale est comprise entre 10 m et 40 m.

**15.** Procédé selon l'une quelconque des revendications précédentes, **caractérisé en ce que** l'objet présentant dans une direction perpendiculaire à l'axe du faisceau laser, une dimension transverse maximale qui varie en fonction de la variation de la distance entre l'objet et le détecteur, le faisceau laser a une ouverture apte à contenir cette dimension maximale variable.

**16.** Procédé selon l'une quelconque des revendications précédentes, **caractérisé en ce que** la durée des impulsions du laser est de l'ordre de 1 ns.

**17.** Procédé selon l'une quelconque des revendications précédentes, **caractérisé en ce que** le laser a une longueur d'onde comprise entre 0,8 $\mu$m et 2,5 $\mu$m, notamment sensiblement égale à 1.55 $\mu$m.

**18.** Procédé selon l'une quelconque des revendications précédentes, **caractérisé en ce que** l'objet est mono dimensionnel ou bidimensionnel ou tridimensionnel.

**19.** Procédé selon l'une quelconque des revendications précédentes, **caractérisé en ce que** l'objet est un aéronef.

**20.** Procédé selon l'une quelconque des revendications précédentes, **caractérisé en ce que** le faisceau laser est pointé à partir d'un aéronef.

**21.** Procédé de constitution d'une base de données de signatures profilométriques d'objets, **caractérisé en ce que** pour chaque objet, la signature profilométrique est obtenue par simulation numérique du pointage sur l'objet d'un faisceau laser à impulsions de longueur $L_i$, cette longueur $L_i$ étant au moins 10 fois plus courte que la longueur $R_u$ de l'objet considérée selon l'axe de pointage du laser, **en ce que** pour chaque impulsion, la signature est obtenue par intégration sur la longueur $R_u$ et **en ce qu'**ainsi la signature comporte $R_u/L_i$ points.

**22.** Procédé selon la revendication précédente, **caractérisé en ce que** la signature profilométrique comprend pour chaque dimension, une composante cohérente représentative de la réflexion du faisceau laser sur l'objet et une composante incohérente représentative de la diffusion du faisceau laser sur l'objet.

**23.** Procédé selon l'une quelconque des revendications 21 à 22, **caractérisé en ce que** chaque signature de la base de données est calculée de la manière suivante :

- représentation numérique de l'objet,
- facettisation, c'est-à-dire découpage de la représentation en facettes triangulaires,
- calcul électromagnétique de la signature à partir des facettes, le calcul étant établi en fonction des équations de Maxwell.

**24.** Procédé selon la revendication précédente, **caractérisé en ce que** chaque triangle est défini en fonction de sa position dans l'objet, son orientation, sa taille, son indice optique et sa rugosité.

**25.** Procédé selon l'une quelconque des revendications 21 à 24, **caractérisé en ce qu'**il comprend une étape consistant à exprimer chaque signature de la base de données en fonction de ses moments centrés d'ordre 1 à $k_{Max}$, $k_{max}$ étant prédéterminé.

**26.** Procédé selon la revendication précédente, **caractérisé en ce que** l'étape précédente comprend les étapes consistant à :

normaliser chaque signature par rapport à son pic maximum,
calculer les moments centrés d'ordre 1 à $k_{Max}$ de chaque signature.

**27.** Procédé selon la revendication précédente, **caractérisé en ce qu'**il comprend les étapes consistant à :

construire une matrice normalisée F des signatures de tous les objets,

construire une matrice de confusion des signatures de la base de données entre elles.

28. Procédé selon la revendication précédente, **caractérisé en ce que** la matrice de confusion est construite en fonction d'un paramètre représentatif du bruit.

29. Procédé selon l'une quelconque des revendications 27 ou 28, **caractérisé en ce que** la base de donnée est répartie en au moins deux sous-bases de données à partir de la matrice de confusion.

30. Procédé selon l'une quelconque des revendications 21 à 29, **caractérisé en ce que** chaque signature est filtrée par un filtrage de type Shepp-Logan.

31. Procédé selon l'une quelconque des revendications 21 à 30, **caractérisé en ce que** le faisceau laser ayant un axe de pointage déterminé en fonction d'un angle de site et d'un angle de gisement, et l'objet présentant dans l'axe du faisceau laser, une dimension longitudinale, la signature acquise est :

- une signature 3D établie en fonction de la dimension longitudinale de l'objet, d'un angle de gisement et d'un angle de site, ou
- une signature 2D établie en fonction de la dimension longitudinale et d'un angle de gisement avec un angle de site déterminé, ou d'un angle de site avec un angle de gisement déterminé, ou
- une signature 1D établie en fonction de la dimension longitudinale de l'objet avec un angle de gisement et un angle de site déterminés.

32. Procédé selon la revendication précédente, **caractérisé en ce que** l'objet présentant dans l'axe du faisceau laser, une dimension longitudinale, l'impulsion du laser présente une longueur de l'ordre de 100 fois inférieure à la dimension longitudinale de l'objet.

33. Procédé selon l'une quelconque des 21 à 32, **caractérisé en ce que** le laser a une longueur d'onde comprise entre 0,8 $\mu$m et 2,5 $\mu$m, notamment sensiblement égale à 1.55 $\mu$m.

34. Procédé selon l'une quelconque des revendications 21 à 33, **caractérisé en ce que** l'objet est mono dimensionnel ou bidimensionnel ou tridimensionnel.

**Claims**

1. Method of identifying an object by profilometry which comprises a step for acquisition of a profilometric signature of the object and a step for comparison of a signature of the object representative of the acquired signature, with signatures in a database, **characterized in that** the profilometric signature of the object is obtained by pointing to the object a laser beam with pulses of length $L_i$, this length $L_i$ being at least ten times shorter than the length $R_u$ of the object concerned along the laser pointing axis, **in that**, for each pulse, the signature is obtained by integration over the length $R_u$ and **in that** the signature thus comprises $R_u/L_i$ points.

2. Method according to the preceding claim, **characterized in that**, the laser beam having a pointing axis determined as a function of an elevation angle and a bearing angle, and the object exhibiting, in the axis of the laser beam, a longitudinal dimension, the acquired signature is:

- a 3D signature established as a function of the longitudinal dimension of the object, of a bearing angle and of an elevation angle, or
- a 2D signature established as a function of the longitudinal dimension and a bearing angle with a determined elevation angle, or of an elevation angle with a determined bearing angle, or
- a 1D signature established as a function of the longitudinal dimension of the object with determined bearing and elevation angles.

3. Method according to the preceding claim, **characterized in that** the profilometric signature comprises for each dimension, a coherent component representative of the reflection of the polarized laser beam on the object and an incoherent component representative of the diffusion of the polarized laser beam on the object.

4. Method according to any one of the preceding claims, **characterized in that** it comprises a step for filtering the acquired signature, the filtered signature obtained being representative of the acquired signature.

5. Method according to the preceding claim, **characterized in that** the filtering is a Shepp-Logan type filtering.

6. Method according to either of Claims 4 or 5,
   **characterized in that**, the filtered signature comprising main peaks, it comprises a step for determining the main peaks of the filtered signature, the signature with main peaks obtained being representative of the acquired signature.

7. Method according to any one of the preceding claims, **characterized in that** it comprises a step consisting in expressing each signature in the database as a function of its centered moments of order 1 to $k_{Max}$, $k_{Max}$ being predetermined.

8. Method according to the preceding claim, **characterized in that** the preceding step comprises steps consisting in:

   normalizing each signature relative to its maximum peak,
   calculating the centered moments of order 1 to $k_{Max}$ of each signature.

9. Method according to any one of the preceding claims, **characterized in that** the signature to be compared is the acquired signature.

10. Method according to any one of Claims 1 to 6, **characterized in that** the comparison step comprises a step for calculation of the barycenter of the signature representative of the acquired signature.

11. Method according to the preceding claim, **characterized in that** the comparison step comprises a step for calculation of the barycenter of each signature in the database.

12. Method according to any one of Claims 1 to 6, **characterized in that** the comparison step comprises a tomographic reconstruction step based on a filtered back-projection of the acquired signature.

13. Method according to any one of the preceding claims, **characterized in that**, the object presenting in the axis of the laser beam a longitudinal dimension, the laser pulse presents a length of the order of 100 times less than the longitudinal dimension of the object.

14. Method according to any one of the preceding claims, **characterized in that**, the object presenting in the axis of the laser beam a longitudinal dimension, this longitudinal dimension is between 10 m and 40 m.

15. Method according to any one of the preceding claims, **characterized in that**, the object presenting a direction perpendicular to the axis of the laser beam a maximum transverse dimension that varies as a function of the variation of the distance between the object and the detector, the laser beam has an aperture that can contain this variable maximum dimension.

16. Method according to any one of the preceding claims, **characterized in that** the duration of the laser pulses is of the order of 1 ns.

17. Method according to any one of the preceding claims, **characterized in that** the laser has a wavelength between 0.8 $\mu$m and 2.5 $\mu$m, notably roughly equal to 1.55 $\mu$m.

18. Method according to any one of the preceding claims, **characterized in that** the object is one-dimensional or two-dimensional or three-dimensional.

19. Method according to any one of the preceding claims, **characterized in that** the object is an aircraft.

20. Method according to any one of the preceding claims, **characterized in that** the laser beam is pointed from an aircraft.

21. Method of compiling a database of profilometric signatures of objects, **characterized in that**, for each object, the profilometric signature is obtained by digital simulation of the pointing to the object of a laser beam with pulses of length $L_i$, this length $L_i$ being at least 10 times shorter than the length $R_u$ of the object concerned along the laser pointing axis, **in that**, for each pulse, the signature is obtained by integration over the length $R_u$ and **in that** the

signature thus comprises $R_u/L_i$ points.

22. Method according to the preceding claim, **characterized in that** the profilometric signature comprises, for each dimension, a coherent component representative of the reflection of the laser beam on the object and an incoherent component representative of the diffusion of the laser beam on the object.

23. Method according to either of Claims 21 or 22, **characterized in that** each signature in the database is calculated as follows:

- digital representation of the object,
- facetization, that is, subdivision of the representation into triangular facets,
- electromagnetic calculation of the signature from the facets, the calculation being established according to Maxwell equations.

24. Method according to the preceding claim, **characterized in that** each triangle is defined as a function of its position in the object, its orientation, its size, its optical index and its roughness.

25. Method according to any one of Claims 21 to 24, **characterized in that** it comprises a step consisting in expressing each signature in the database as a function of its centered moments of order 1 to $k_{Max}$, $k_{Max}$ being predetermined.

26. Method according to the preceding claim, **characterized in that** the preceding step comprises steps consisting in:

normalizing each signature in relation to its maximum peak,
calculating the centered moments of order 1 to $k_{Max}$ of each signature.

27. Method according to the preceding claim, **characterized in that** it comprises steps consisting in:

constructing a normalized matrix F of the signatures of all the objects,
constructing a confusion matrix of the signatures in the database between themselves.

28. Method according to the preceding claim, **characterized in that** the confusion matrix is constructed as a function of a parameter representative of the noise.

29. Method according to either of Claims 27 or 28, **characterized in that** the database is divided into at least two sub-databases based on the confusion matrix.

30. Method according to any one of Claims 21 to 29, **characterized in that** each signature is filtered by a Shepp-Logan type filtering.

31. Method according to any one of Claims 21 to 30, **characterized in that**, the laser beam having a pointing axis determined as a function of an elevation angle and a bearing angle, and the object presenting in the axis of the laser beam, a longitudinal dimension, the acquired signature is:

- a 3D signature established as a function of the longitudinal dimension of the object, a bearing angle and an elevation angle, or
- a 2D signature established as a function of the longitudinal dimension and a bearing angle with a determined elevation angle, or an elevation angle with a determined bearing angle, or
- a 1D signature established as a function of the longitudinal dimension of the object with determined bearing and elevation angles.

32. Method according to the preceding claim, **characterized in that**, the object presenting in the axis of the laser beam a longitudinal dimension, the laser pulse presents a length of the order of 100 times less than the longitudinal dimension of the object.

33. Method according to any one of Claims 21 to 32,
**characterized in that** the laser has a wavelength between 0.8 $\mu$m and 2.5 $\mu$m, notably roughly equal to 1.55 $\mu$m.

34. Method according to any one of Claims 21 to 33, **characterized in that** the object is one-dimensional or two-dimensional or three-dimensional.

**Patentansprüche**

1. Verfahren zur Identifizierung eines Gegenstands durch Profilometrie, das einen Schritt der Erfassung einer profilometrischen Signatur des Gegenstands und einen Schritt des Vergleichs einer Signatur des Gegenstands, die für die erfasste Signatur repräsentativ ist, mit Signaturen einer Datenbank aufweist, **dadurch gekennzeichnet, dass** die profilometrische Signatur des Gegenstands durch Richten eines Impulslaserstrahls der Länge $L_i$ auf den Gegenstand erhalten wird, wobei diese Länge $L_i$ mindestens 10mal kürzer ist als die Länge $R_u$ des Gegenstands, gesehen gemäß der Richtachse des Lasers, dass für jeden Impuls die Signatur durch Integration auf die Länge $R_u$ erhalten wird, und dass so die Signatur $R_u/L_i$ Punkte aufweist.

2. Verfahren nach dem vorhergehenden Anspruch, **dadurch gekennzeichnet, dass,** wenn der Laserstrahl eine in Abhängigkeit von einem Höhenwinkel und von einem Seitenwinkel bestimmte Richtachse hat, und der Gegenstand in der Achse des Laserstrahls eine Längsdimension aufweist, die erfasste Signatur:

   - eine 3D-Signatur, die in Abhängigkeit von der Längsdimension des Gegenstands, von einem Seitenwinkel und von einem Höhenwinkel erstellt wird, oder
   - eine 2D-Signatur, die in Abhängigkeit von der Längsdimension und von einem Seitenwinkel mit einem bestimmten Höhenwinkel oder von einem Höhenwinkel mit einem bestimmten Seitenwinkel erstellt wird, oder
   - eine 1D-Signatur ist, die in Abhängigkeit von der Längsdimension des Gegenstands mit einem bestimmten Seitenwinkel und mit einem bestimmten Höhenwinkel erstellt wird.

3. Verfahren nach dem vorhergehenden Anspruch, **dadurch gekennzeichnet, dass** die profilometrische Signatur für jede Dimension eine kohärente Komponente, die für die Reflektion des polarisierten Laserstrahls auf den Gegenstand repräsentativ ist, und eine inkohärente Komponente aufweist, die für die Streuung des polarisierten Laserstrahls auf den Gegenstand repräsentativ ist.

4. Verfahren nach einem der vorhergehenden Ansprüche, **dadurch gekennzeichnet, dass** es einen Schritt der Filterung der erfassten Signatur enthält, wobei die erhaltene gefilterte Signatur für die erfasste Signatur repräsentativ ist.

5. Verfahren nach dem vorhergehenden Anspruch, **dadurch gekennzeichnet, dass** die Filterung eine Filterung vom Typ Shepp-Logan ist.

6. Verfahren nach einem der Ansprüche 4 oder 5, **dadurch gekennzeichnet, dass** es, wenn die gefilterte Signatur Hauptspitzen aufweist, einen Schritt enthält, um die Hauptspitzen der gefilterten Signatur zu bestimmen, wobei die erhaltene Signatur mit Hauptspitzen für die erfasste Signatur repräsentativ ist.

7. Verfahren nach einem der vorhergehenden Ansprüche, **dadurch gekennzeichnet, dass** es einen Schritt enthält, der darin besteht, jede Signatur der Datenbank in Abhängigkeit von ihren zentrierten Momenten der Ordnung 1 bis $k_{Max}$ auszudrücken, wobei $k_{Max}$ vorbestimmt ist.

8. Verfahren nach dem vorhergehenden Anspruch, **dadurch gekennzeichnet, dass** der vorhergehende Schritt die folgenden Schritte aufweist, die darin bestehen:

   jede Signatur bezüglich ihrer Hauptspitze zu normieren,
   die zentrierten Momente der Ordnung 1 bis $k_{Max}$ jeder Signatur zu berechnen.

9. Verfahren nach einem der vorhergehenden Ansprüche, **dadurch gekennzeichnet, dass** die zu vergleichende Signatur die erfasste Signatur ist.

10. Verfahren nach einem der Ansprüche 1 bis 6, **dadurch gekennzeichnet, dass** der Vergleichsschritt einen Schritt der Berechnung des Schwerpunkts der für die erfasste Signatur repräsentativen Signatur enthält.

**11.** Verfahren nach dem vorhergehenden Anspruch,
**dadurch gekennzeichnet, dass** der Vergleichsschritt einen Schritt der Berechnung des Schwerpunkts jeder Signatur der Datenbank enthält.

**12.** Verfahren nach einem der Ansprüche 1 bis 6,
**dadurch gekennzeichnet, dass** der Vergleichsschritt einen Schritt der tomographischen Rekonstruktion basierend auf einer gefilterten Rückprojektion der erfassten Signatur enthält.

**13.** Verfahren nach einem der vorhergehenden Ansprüche,
**dadurch gekennzeichnet, dass,** wenn der Gegenstand in der Achse des Laserstrahls eine Längsdimension aufweist, der Impuls des Lasers eine Länge in der Größenordnung von 100mal kleiner als die Längsdimension des Gegenstands aufweist.

**14.** Verfahren nach einem der vorhergehenden Ansprüche,
**dadurch gekennzeichnet, dass,** wenn der Gegenstand in der Achse des Laserstrahls eine Längsdimension aufweist, diese Längsdimension zwischen 10 m und 40 m liegt.

**15.** Verfahren nach einem der vorhergehenden Ansprüche,
**dadurch gekennzeichnet, dass,** wenn der Gegenstand in einer Richtung lotrecht zur Achse des Laserstrahls eine maximale Querdimension aufweist, die in Abhängigkeit von der Veränderung des Abstands zwischen dem Gegenstand und dem Detektor variiert, der Laserstrahl eine Apertur hat, die diese maximale variable Dimension enthalten kann.

**16.** Verfahren nach einem der vorhergehenden Ansprüche,
**dadurch gekennzeichnet, dass** die Dauer der Impulse des Lasers in der Größenordnung von 1 ns liegt.

**17.** Verfahren nach einem der vorhergehenden Ansprüche,
**dadurch gekennzeichnet, dass** der Laser eine Wellenlänge hat, die zwischen 0,8 $\mu$m und 2,5 $\mu$m liegt, insbesondere im Wesentlichen gleich 1,55 $\mu$m ist.

**18.** Verfahren nach einem der vorhergehenden Ansprüche,
**dadurch gekennzeichnet, dass** der Gegenstand eindimensional oder zweidimensional oder dreidimensional ist.

**19.** Verfahren nach einem der vorhergehenden Ansprüche,
**dadurch gekennzeichnet, dass** der Gegenstand ein Luftfahrzeug ist.

**20.** Verfahren nach einem der vorhergehenden Ansprüche,
**dadurch gekennzeichnet, dass** der Laserstrahl ausgehend von einem Luftfahrzeug gerichtet wird.

**21.** Verfahren zum Aufbau einer Datenbank von profilometrischen Signaturen von Gegenständen,
**dadurch gekennzeichnet, dass** die profilometrische Signatur für jeden Gegenstand durch digitale Simulation des Richtens eines Impulslaserstrahls der Länge $L_i$ auf den Gegenstand erhalten wird, wobei diese Länge $L_i$ mindestens 10mal kürzer ist als die Länge $R_u$ des betrachteten Gegenstands gemäß der Richtachse des Lasers, dass für jeden Impuls die Signatur durch Integration auf die Länge $R_u$ erhalten wird, und dass so die Signatur $R_u/L_i$ Punkte aufweist.

**22.** Verfahren nach dem vorhergehenden Anspruch,
**dadurch gekennzeichnet, dass** die profilometrische Signatur für jede Dimension eine kohärente Komponente, die für die Reflektion des Laserstrahls auf den Gegenstand repräsentativ ist, und eine inkohärente Komponente aufweist, die für die Streuung des Laserstrahls auf den Gegenstand repräsentativ ist.

**23.** Verfahren nach einem der Ansprüche 21 bis 22,
**dadurch gekennzeichnet, dass** jede Signatur der Datenbank folgendermaßen berechnet wird:

- digitale Darstellung des Gegenstands,
- Facettisierung, d.h. Zerschneiden der Darstellung in dreieckige Facetten,
- elektromagnetische Berechnung der Signatur ausgehend von den Facetten, wobei die Berechnung in Abhängigkeit von den Maxwell-Gleichungen erstellt wird.

**24.** Verfahren nach dem vorhergehenden Anspruch,
**dadurch gekennzeichnet, dass** jedes Dreieck in Abhängigkeit von seiner Position im Gegenstand, seiner Ausrichtung, seiner Größe, seinem optischen Index und seiner Rauhigkeit definiert wird.

**25.** Verfahren nach einem der Ansprüche 21 bis 24,
**dadurch gekennzeichnet, dass** es einen Schritt enthält, der darin besteht, jede Signatur der Datenbank in Abhängigkeit von ihren zentrierten Momenten der Ordnung 1 bis $k_{Max}$ auszudrücken, wobei $k_{Max}$ vorbestimmt ist.

**26.** Verfahren nach dem vorhergehenden Anspruch,
**dadurch gekennzeichnet, dass** der vorhergehende Schritt die Schritte enthält, die darin bestehen:

jede Signatur bezüglich ihrer Hauptspitze zu normieren,
die zentrierten Momente der Ordnung 1 bis $k_{Max}$ jeder Signatur zu berechnen.

**27.** Verfahren nach dem vorhergehenden Anspruch,
**dadurch gekennzeichnet, dass** es die Schritte aufweist, die darin bestehen:

eine normierte Matrix F der Signaturen aller Gegenstände zu konstruieren,
eine Konfusionsmatrix der Signaturen der Datenbank untereinander zu konstruieren.

**28.** Verfahren nach dem vorhergehenden Anspruch,
**dadurch gekennzeichnet, dass** die Konfusionsmatrix in Abhängigkeit von einem für das Rauschen repräsentativen Parameter konstruiert wird.

**29.** Verfahren nach einem der Ansprüche 27 oder 28,
**dadurch gekennzeichnet, dass** die Datenbank ausgehend von der Konfusionsmatrix in mindestens zwei Teildatenbanken aufgeteilt ist.

**30.** Verfahren nach einem der Ansprüche 21 bis 29,
**dadurch gekennzeichnet, dass** jede Signatur durch eine Filterung vom Typ Shepp-Logan gefiltert wird.

**31.** Verfahren nach einem der Ansprüche 21 bis 30,
**dadurch gekennzeichnet, dass,** wenn der Laserstrahl eine Richtachse hat, die ausgehend von einem Höhenwinkel und von einem Seitenwinkel bestimmt wird, und der Gegenstand in der Achse des Laserstrahls eine Längsdimension aufweist, die erfasste Signatur:

- eine 3D-Signatur, die in Abhängigkeit von der Längsdimension des Gegenstands, von einem Seitenwinkel und von einem Höhenwinkel erstellt wird, oder
- eine 2D-Signatur, die in Abhängigkeit von der Längsdimension und von einem Seitenwinkel mit einem bestimmten Höhenwinkel oder von einem Höhenwinkel mit einem bestimmten Seitenwinkel erstellt wird, oder
- eine 1D-Signatur ist, die in Abhängigkeit von der Längsdimension des Gegenstands mit einem bestimmten Seitenwinkel und mit einem bestimmten Höhenwinkel erstellt wird.

**32.** Verfahren nach dem vorhergehenden Anspruch,
**dadurch gekennzeichnet, dass,** wenn der Gegenstand in der Achse des Laserstrahls eine Längsdimension aufweist, der Impuls des Lasers eine Länge in der Größenordnung von 100mal kleiner als die Längsdimension des Gegenstands aufweist.

**33.** Verfahren nach einem der Ansprüche 21 bis 32,
**dadurch gekennzeichnet, dass** der Laser eine Wellenlänge hat, die zwischen 0,8 $\mu$m und 2,5 $\mu$m liegt, insbesondere im Wesentlichen gleich 1,55 $\mu$m ist.

**34.** Verfahren nach einem der Ansprüche 21 bis 33,
**dadurch gekennzeichnet, dass** der Gegenstand eindimensional oder zweidimensional oder dreidimensional ist.

**FIG.1a**

**FIG.1b**

Résolution spatiale
(liée au profil laser)

S

Représentation de
l'étalement spatial des
points brillants
sur la cible

30

FIG.2

S acquise

S filtrée (Shepp-Logan)

FIG.3

S filtrée à pics principaux

FIG.4

Plan de l'image rétroprojetée

Matrice de SELd

## FIG.5a

## FIG.5b

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4380391 A